# EUROPÄISCHE PATENTANMELDUNG

(11) **EP 4 826 211 A1**
(43) Veröffentlichungstag der Anmeldung: **21.10.2026**
(21) Anmeldenummer: 26165542.7
(22) Anmeldetag: 17.03.2026
(51) Int. Cl.: F01D 5/14

(54) **WELLENLEISTUNGSTRIEBWERK**

(30) Priorität: 19.03.2025 DE 102025110612
(71) Anmelder: MTU Aero Engines AG, 80995 München (DE)
(72) Erfinder: Bijewitz, Julian, 80995 München (DE); Metscher, Martin, 80995 München (DE); Trübenbach, Jens, 80995 München (DE)

(57) **Zusammenfassung**

Die Erfindung betrifft ein beispielsweise als Turboprop oder Helikoptertriebwerk ausgeführtes Wellenleistungstriebwerk (1). Dessen Heißgaserzeuger (2) umfasst eine Umkehrbrennkammer (4), die ein äußeres Luftleitgehäuse (5) und ein inneres Brennraumgehäuse (6) aufweist. Eine Arbeitsturbine (3) des Wellenleistungstriebwerks (1) ist in Arbeitsgasströmungsrichtung nach dem Heißgaserzeuger (2) angeordnet und definiert einen Strömungskanal (12). Ein Brennraumgehäuseinnenradius (RIB) am inneren Brennraumgehäuse (6) der Umkehrbrennkammer (4) und ein Strömungskanalinnenradius (RIP) an einem Arbeitsturbinenaustritt (15) der Arbeitsturbine (3) entsprechen einander im Wesentlichen.

## Beschreibung

Die Erfindung betrifft ein Wellenleistungstriebwerk, das beispielsweise als ein Propellerturbinenluftstrahltriebwerk oder als ein Helikoptertriebwerk ausgeführt ist.

Es besteht - nicht nur im Flugzeugbau - der Bedarf, Wellenleistungstriebwerke besonders effizient und zugleich kompakt auszubilden. Ein herkömmliches Wellenleistungstriebwerk ist zum Beispiel aus der FR 3 135 111 A1 bekannt.

Aufgabe der vorliegenden Erfindung ist es, ein besonders effizientes und zugleich kompaktes Wellenleistungstriebwerk bereitzustellen. Dies wird erfindungsgemäß durch die Lehre der unabhängigen Ansprüche erreicht. Vorteilhafte Ausführungen der Erfindung sind Gegenstand der Unteransprüche.

Zur Lösung der Aufgabe wird ein Wellenleistungstriebwerk vorgeschlagen, welches eine Heißgaserzeuger mit einer Umkehrbrennkammer, insbesondere ringförmigen Umkehrbrennkammer, aufweist. Die Umkehrbrennkammer weist ein äußeres Luftleitgehäuse und ein inneres Brennraumgehäuse auf, wobei das Brennraumgehäuse im Inneren des Luftleitgehäuses angeordnet ist. Das innere Brennraumgehäuse kann auch als Flammrohr bezeichnet werden. Eine Verdichtereinheit des Wellenleistungstriebwerks bzw. des Heißgaserzeugers kann genau eine Verdichterstufe oder zwei oder mehr Verdichterstufen aufweisen.

Das Wellenleistungstriebwerk weist zudem eine Arbeitsturbine auf, die einen Strömungskanal für das Arbeitsgas definiert und eine Arbeitsturbinenstufe oder zwei oder mehr Arbeitsturbinenstufen bzw. Arbeitsturbinenräder aufweist. Ein Arbeitsturbinenaustritt bzw. eine axiale Position des Arbeitsturbinenaustritts der Arbeitsturbine ist hinsichtlich des Strömungskanalinnenradius durch einen Nabenradius einer Scheibe bzw. Disk, insbesondere einer Blisk desjenigen der Arbeitsturbinenräder definiert, welches das (entlang einer Arbeitsturbinenwelle bzw. in Arbeitsgasströmungsrichtung des Wellenleistungstriebwerks betrachtet) axial letzte Arbeitsturbinenrad ist. Denn das zur axial letzten Arbeitsturbinenstufe gehörende Arbeitsturbinenrad, das folglich axial am nächsten am Arbeitsturbinengehäuseauslass angeordnet ist, weist den größten Nabenradius auf. Insbesondere ist das Wellenleistungstriebwerk so ausgebildet, dass die insbesondere aus der Arbeitsturbine austretende Strömung axial aus dem Wellenleistungstriebwerk ausgeleitet wird.

Ein Brennraumgehäuseinnenradius am inneren Brennraumgehäuse der Umkehrbrennkammer und der Strömungskanalinnenradius an der Position des Arbeitsturbinenaustritts entsprechen einander im Wesentlichen. Das bedeutet, der Brennraumgehäuseinnenradius und der Strömungskanalinnenradius an der (axialen) Position des Arbeitsturbinenaustritts weichen nur unwesentlich voneinander ab. Beim Brennraumgehäuseinnenradius handelt es sich insbesondere um einen minimalen Innenradius des Brennraumgehäuses (Flammrohr) zwischen einem Luftleitgehäuseeingang und einem Umkehrbereich der Umkehrbrennkammer. Beim Brennraumgehäuseinnenradius kann es sich um einen größten Innenradius des Brennraumgehäuses handeln.

Der Strömungskanalinnenradius an der Position des Arbeitsturbinenaustritts entspricht insbesondere dem Strömungskanalinnendurchmesser an der axialen Position eines stromabwärtigsten Schaufelgitters.

In einer Ausführung ist die Umkehrbrennkammer so ausgebildet, dass der Gasstrom seine Richtung wenigstens und/oder höchstens zweimal, vorzugsweise gegensinnig, um mehr als 90°, vorzugsweise wenigstens und/oder höchstens zweimal, vorzugsweise gegensinnig, um wenigstens 140°, in einer Weiterbildung wenigstens und/oder höchstens zweimal, vorzugsweise gegensinnig, um wenigstens 180°, ändert, bevorzugt nicht in der Verbrennungszone.

Ein Maß des Brennraumgehäuseinnenradius und ein Maß des Strömungskanalinnenradius stammen insbesondere aus einem Wertebereich, dessen oberer und unterer Grenzwert um einen vorgegebenen Prozentanteil eines Mittelwerts des Wertebereichs von diesem Mittelwert beabstandet sind. Dabei ist der Wertebereich insbesondere besonders klein. Der Brennraumgehäuseinnenradius kann (etwas) größer als der Strömungskanalinnenradius am Arbeitsturbinenaustritt sein, oder der Strömungskanalinnenradius am Arbeitsturbinenaustritt kann (etwas) größer als der Brennraumgehäuseinnenradius sein.

Im Gegensatz zu herkömmlichen Wellenleistungstriebwerken bedeutet das, dass der Strömungskanalinnenradius an der Position des Arbeitsturbinenaustritts, welcher insbesondere im Wesentlichen dem Nabenradius der letzten Turbinenstufe entspricht, besonders groß ist. Ist der Brennraumgehäuseinnenradius der Umkehrbrennkammer als konstruktive Randbedingung vorgegeben, wird beim Konstruieren des Wellenleistungstriebwerks der Strömungskanalinnenradius an der Position des Arbeitsturbinenaustritts vergrößert, bis er - wie oben dargelegt - im Wesentlichen dem Brennraumgehäuseinnenradius entspricht. Dadurch ergibt sich eine radial besonders kompakte Konstruktion des Wellenleistungstriebwerks. So kann das Wellenleistungstriebwerk besonders vielseitig bzw. flexibel in ein Flugzeug, beispielsweise in einen Helikopter, integriert werden. Ferner wird durch den verglichen mit dem Stand der Technik größeren Strömungskanalinnenradius am Arbeitsturbinenaustritt ein größerer Durchmesser der letzten Arbeitsturbinenstufe, an welcher die Gasströmung aus der Arbeitsturbine austritt, bzw. des letzten Arbeitsturbinenrads, ermöglicht. Aufgrund des vergrößerten Arbeitsturbinenstufen- bzw. Arbeitsturbinenraddurchmessers weist die Arbeitsturbine bei gegebener Turbinenleistung eine höhere Umfangsgeschwindigkeit auf, was zu einer geringeren aerodynamischen Belastung des Laufzeugs der Arbeitsturbine führt, ohne eine Erhöhung der Drehzahl und damit der mechanischen Belastung vornehmen zu müssen. Dadurch wird ein besonders hoher Wirkungsgrad mit dem wie hier beschrieben ausgestalteten Wellenleistungstriebwerk erzielt.

In einer Ausführung beträgt eine Drehzahl der Arbeitsturbine bei 100% relativer Drehzahl des Wellenleistungstriebwerks wenigstens 15.000 Umdrehungen pro Minute und/oder höchstens 26.000 Umdrehungen pro Minute, insbesondere höchstens 22.000 Umdrehungen pro Minute. 100% relative Drehzahl des Wellenleistungstriebwerks ist in einer Ausführung die Drehzahl bei bzw. für take-off Power, vorzugsweise bei internationaler Standardatmosphäre ("international standard atmosphere", ISA). Entsprechend beträgt in einer Ausführung eine Drehzahl der Arbeitsturbine bei Take-Off-Leistung des Wellenleistungstriebwerks bei ISA wenigstens 15.000 Umdrehungen pro Minute und/oder höchstens 26.000 Umdrehungen pro Minute, insbesondere höchstens 22.000 Umdrehungen pro Minute. Bei dieser spezifischen Leistungsklasse kann, insbesondere aufgrund der hier vorliegenden baulichen und aerodynamischen Randbedingungen, eine besonders hohe Wirkungsgradverbesserung erzielt werden.

Einer möglichen Weiterbildung zufolge unterscheiden sich der Brennraumgehäuseinnenradius und der Strömungskanalinnenradius an der Position des Arbeitsturbinenaustritts in ihrem Maß um höchstens 20 % voneinander. Insbesondere unterscheiden sich der Brennraumgehäuseinnenradius und der Strömungskanalinnenradius an der Position des Arbeitsturbinenaustritts in ihrem Maß um höchstens 10 % voneinander. Bei einer Ausführung unterscheiden sich der Brennraumgehäuseinnenradius und der Strömungskanalinnenradius an der Position des Arbeitsturbinenaustritt in ihrem Maß um höchstens 5 % voneinander.

Gemäß einer weiteren möglichen Ausgestaltung weichen der Brennraumgehäuseinnenradius und der Strömungskanalinnenradius an der Position des Arbeitsturbinenaustritts nicht voneinander ab (Fertigungstoleranzen nicht beachtet). Anders ausgedrückt: Der Brennraumgehäuseinnenradius und der Strömungskanalinnenradius an der Position des Arbeitsturbinenaustritts sind in dieser Ausgestaltung gleich (groß). Dadurch wird dem Gedanken an die besonders kompakte Struktur des Wellenleistungstriebwerks in besonderem Maße Rechnung getragen.

Ferner ist der Arbeitsturbinenaustritt bzw. dessen Position hinsichtlich eines Strömungskanalinnenradius durch eine (entlang einer Arbeitsturbinenwelle bzw. in Arbeitsgasströmungsrichtung des Wellenleistungstriebwerks betrachtet) letzte der Arbeitsturbinenstufen bzw. durch das letzte der Arbeitsturbinenräder definiert. Denn die axial letzte, das heißt die axial am nächsten an der Position des Arbeitsturbinenaustritts angeordnete der Arbeitsturbinenstufen ist gewöhnlich die außenradiusgrößte; das zur letzten Arbeitsturbinenstufe gehörende, letzte Arbeitsturbinenrad ist gewöhnlich das außenradiusgrößte der Arbeitsturbinenräder. Hierbei sieht eine weitere mögliche Ausführungsform vor, dass ein Luftleitgehäuseaußenradius am äußeren Luftleitgehäuse der Umkehrbrennkammer und der Strömungskanalaußenradius an der Position des Arbeitsturbinenaustritts der Arbeitsturbine einander im Wesentlichen entsprechen. Das bedeutet, der Luftleitgehäuseaußenradius und der Strömungskanalaußenradius an der Position des Arbeitsturbinenaustritts weichen nur unwesentlich voneinander ab. Beim Luftleitgehäuseaußenradius handelt es sich insbesondere um einen Außenradius des Luftleitgehäuses zwischen einem Luftleitgehäuseeingang und einem Umkehrbereich der Umkehrbrennkammer. Beim Luftleitgehäuseaußenradius kann es sich um einen größten Radius des Luftleitgehäuses handeln.

Eine Länge bzw. ein Längenmaß des Luftleitgehäuseaußenradius und eine Länge bzw. ein Längenmaß des Strömungskanalaußenradius stammen insbesondere aus einem Wertebereich, dessen oberer und unterer Grenzwert um einen vorgegebenen Prozentanteil eines Mittelwerts des Wertebereichs von diesem Mittelwert beabstandet sind. Dabei ist der Wertebereich insbesondere besonders klein. Der Luftleitgehäuseaußenradius kann (etwas) größer als der Strömungskanalaußenradius an der Position des Arbeitsturbinenaustritts sein, oder der Strömungskanalaußenradius an der Position des Arbeitsturbinenaustritt kann (etwas) größer als der Luftleitgehäuseaußenradius sein.

Insbesondere unterscheiden sich der Luftleitgehäuseaußenradius und der Strömungskanalaußenradius an der Position des Arbeitsturbinenaustritts in ihrem Maß um höchstens 20 % voneinander. Insbesondere unterscheiden sich der Luftleitgehäuseaußenradius und der Strömungskanalaußenradius an der Position des Arbeitsturbinenaustritts in ihrem Maß um höchstens 10 % voneinander. Bei einer Ausführung unterscheiden sich der Luftleitgehäuseaußenradius und der Strömungskanalaußenradius am Arbeitsturbinenaustritt in ihrem Maß um höchstens 5 % voneinander.

Es kann ferner vorgesehen sein, dass der Luftleitgehäuseaußenradius und der Strömungskanalaußenradius an der Position des Arbeitsturbinenaustritts nicht voneinander abweichen (Fertigungstoleranzen nicht beachtet). Anders ausgedrückt: Der Luftleitgehäuseaußenradius und der Strömungskanalaußenradius an der Position des Arbeitsturbinenaustritts sind in dieser Ausgestaltung gleich. Dadurch wird dem Gedanken an die besonders kompakte Struktur des Wellenleistungstriebwerks in besonderem Maße Rechnung getragen.

Bei einer weiteren möglichen Ausführungsform ist die Arbeitsturbine eine Freilaufturbine. Eine Heißgaserzeugerwelle des Heißgaserzeugers und eine Arbeitsturbinenwelle der Arbeitsturbine sind somit im Betrieb des Wellenleistungstriebwerks relativ zueinander dreh- bzw. rotierbar, mithin nicht drehfest miteinander gekoppelt. So sind Betriebszustände des Wellenleistungstriebwerks möglich, bei denen die Heißgaserzeugerwelle mit einer anderen Drehzahl rotiert als die Arbeitsturbinenwelle.

Eine weitere mögliche Ausgestaltung sieht vor, dass die Verdichtereinheit des Heißgaserzeugers ein Radialverdichterrad aufweist, die Verdichterstufe oder eine der Verdichterstufen also als ein Radialverdichter ausgebildet ist. Insbesondere ist durch das Radialverdichterrad eine Endstufe des Heißgaserzeugers, also eine in Arbeitsgasströmungsrichtung betrachtet letzte Verdichterstufe der Verdichtereinheit bzw. des Heißgaserzeugers, gebildet. Dies unterstützt die erwünschte Kompaktheit des Wellenleistungstriebwerks und erlaubt ein besonders effizientes Verdichten der Luft, die im Betrieb des Wellenleistungstriebwerks in die Umkehrbrennkammer geführt wird.

Der Heißgaserzeuger kann in einwelliger oder - wie eine weitere mögliche Ausführungsform vorsieht - in zweiwelliger Bauweise ausgebildet sein. Bei einer solchen Ausführung kann der Heißgaserzeuger (in Arbeitsgasströmungsrichtung betrachtet) beispielsweise ein Niederdruckverdichterrad, ein Hochdruckverdichterrad, ein Hochdruckturbinenrad und ein Niederdruckturbinenrad aufweisen, wobei eine das Niederdruckverdichterrad und das Niederdruckturbinenrad drehfest verbindende Welle eine Hohlwelle axial durchläuft. Mittels der Hohlwelle sind bei einer solchen Ausführung das Hochdruckverdichterrad und das Hochdruckturbinenrad miteinander drehfest verbunden.

Gemäß einer weiteren möglichen Ausführungsform ist das Wellenleistungstriebwerk als ein Turboprop (Propellerturbinenluftstrahltriebwerk bzw. Propellerluftstrahltriebwerk) ausgeführt. Die Arbeitsturbinenwelle der Arbeitsturbine und ein axial oder achsparallel zur Arbeitsturbinenwelle gelagerter Rotor bzw. Propeller sind dann zur Drehmomentübertragung miteinander gekoppelt. Es kann vorgesehen sein, dass zwischen einer Rotorwelle des Rotors und der Arbeitsturbinenwelle eine Übersetzungs- bzw. Getriebeanordnung eingesetzt ist.

In einer hierzu alternativen Ausgestaltung ist das Wellenleistungstriebwerk als ein Helikoptertriebwerk ausgeführt. Insbesondere ist das Wellenleistungstriebwerk dazu eingerichtet, eine Antriebswelle eines Rotors eines Helikopters anzutreiben. Das bedeutet, die Arbeitsturbinenwelle der Arbeitsturbine und die Antriebswelle des Rotors sind dann zur Drehmomentübertragung miteinander mittels einer Übersetzungs- bzw. Getriebeanordnung gekoppelt. Es ist denkbar, dass das Wellenleistungstriebwerks dazu eingerichtet ist, zwei Antriebswellen, also zwei Rotoren des Helikopters, anzutreiben.

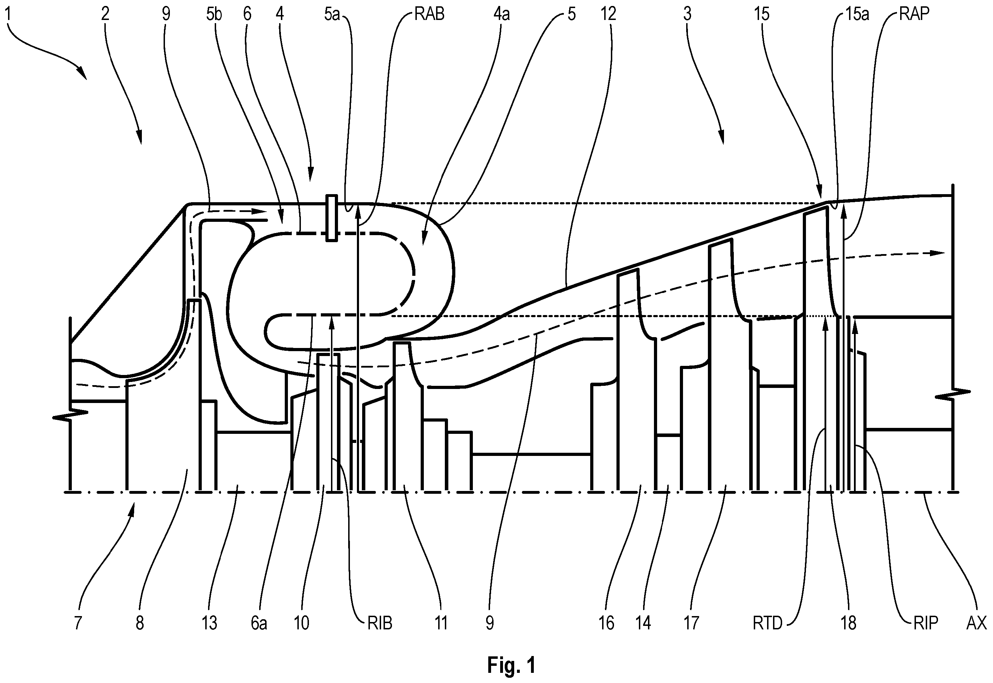

Weitere Merkmale ergeben sich aus der nachfolgenden Beschreibung einer beispielhaften Ausführung im Zusammenhang mit der Zeichnung, deren einzige Figur (bezeichnet mit Fig. 1) ein Wellenleistungstriebwerk 1 in stark schematisierter Ansicht zeigt. Von einer Beschaufelung des Wellenleistungstriebwerks 1 sind nur Laufschaufeln schematisch dargestellt. Das Wellenleistungstriebwerk 1 ist zum Beispiel als Turboprop oder als Helikoptertriebwerk ausgebildet und weist einen Heißgaserzeuger 2 sowie eine Arbeitsturbine 3 auf.

Der Heißgaserzeuger 2 umfasst eine Umkehrbrennkammer 4, welche ein äußeres Luftleitgehäuse 5 und ein inneres Brennraumgehäuse 6 aufweist. Die Umkehrbrennkammer 4 ist hier im Beispiel als eine Umkehrringbrennkammer ausgebildet. Das innere Brennraumgehäuse 6 kann daher auch als Flammrohr bezeichnet werden. Ein Luftleitgehäuseaußenradius RAB der Umkehrbrennkammer 4 bzw. erstreckt sich von einer Rotations- bzw. Längsmittenachse AX des Wellenleistungstriebwerks 1 bis an eine Außenwand 5a des Luftleitgehäuses 5. Dahingegen erstreckt sich ein Brennraumgehäuseinnenradius RIB von der Längsmittenachse AX bis an eine Innenwand 6a des Brennraumgehäuses 6. Entlang der Längsmittenachse AX des Wellenleistungstriebwerks 1 liegen der Luftleitgehäuseaußenradius RAB und der Brennraumgehäuseinnenradius RIB zwischen einem Luftleitgehäuseeingang 5b und einem Umkehrbereich 4a der Umkehrbrennkammer 4.

Bei der beispielhaften Ausführung weist eine Verdichtereinheit 7 des Heißgaserzeugers 2 ein Radialverdichterrad 8 auf, durch welches eine Endstufe des Heißgaserzeugers 2, also eine in Arbeitsgasströmungsrichtung 9 des Wellenleistungstriebwerks 1 betrachtet letzte Verdichterstufe der Verdichtereinheit 7, gebildet ist. Hier im Beispiel weist der Heißgaserzeuger 2 zwei Turbinenstufen, also zwei Turbinenräder 10, 11 auf. Es kann vorgesehen sein, dass der Heißgaserzeuger 2 (in Arbeitsgasströmungsrichtung 9 betrachtet) wenigstens ein Niederdruckverdichterrad, wenigstens ein Hochdruckverdichterrad, das bzw. von welchem eines beispielsweise durch das Radialverdichterrad 8 gebildet ist, sowie ein Hochdruckturbinenrad und ein Niederdruckturbinenrad aufweist. Dabei verläuft eine Welle, mittels derer das wenigstens eine Niederdruckverdichterrad und das Niederdruckturbinenrad drehfest verbunden sind, axial durch eine Hohlwelle hindurch, mittels derer das wenigstens eine Hochdruckverdichterrad und das Hochdruckturbinenrad miteinander drehfest verbunden sind.

Die Arbeitsturbine 3 definiert einen Strömungskanal 12 des Wellenleistungstriebwerks 1 und ist hier im Beispiel als eine Freilaufturbine ausgebildet. Das bedeutet, eine Heißgaserzeugerwelle 13 des Heißgaserzeugers 2 und eine Arbeitsturbinenwelle 14 sind relativ zueinander dreh- bzw. rotierbar, also nicht drehfest miteinander gekoppelt.

Hier im Beispiel ist die Arbeitsturbine 3 dreistufig ausgeführt, weist also drei Arbeitsturbinenstufen und infolgedessen drei Arbeitsturbinenräder 16, 17, 18 auf. Ein Arbeitsturbinenaustritt 15 ist hinsichtlich eines Strömungskanalaußenradius RAP an der (axialen) Position des Arbeitsturbinenaustritts 15 und eines Strömungskanalinnenradius RIP an der (axialen) Position des Arbeitsturbinenaustritts 15 durch diejenige der Arbeitsturbinenstufen definiert, die entlang der Arbeitsturbinenwelle 14 bzw. in Arbeitsgasströmungsrichtung 9 am nächsten am Arbeitsturbinenaustritt 15 angeordnet ist. Der Strömungskanalaußenradius RAP an der Position des Arbeitsturbinenaustritts 15 erstreckt sich von der Rotations- bzw. Längsmittenachse AX bis an ein Kanalaußenwandungselement 15a des Strömungskanals 12 bzw. des Arbeitsturbinenaustritts 15. Dahingegen ist der Strömungskanalinnenradius RIP durch einen Nabenradius RTD einer Scheibe bzw. Disk oder Blisk des Arbeitsturbinenrads definiert, von welcher Schaufeln des Arbeitsturbinenrads radial hervorspringen. Mit anderen Worten: Die Position des Arbeitsturbinenaustritts 15 ist hinsichtlich des Strömungskanalaußenradius RAP und hinsichtlich des Strömungskanalinnenradius RIP durch das letzte der Arbeitsturbinenräder 16, 17, 18 definiert, hier im Beispiel also durch das Arbeitsturbinenrad 18. Denn man erkennt in Fig. 1, dass das axial letzte, das heißt axial am nächsten am Arbeitsturbinenaustritt 15 angeordnete Arbeitsturbinenrad 18 sowohl den größten Außenradius als auch den größten Nabenradius RTD der Arbeitsturbinenräder 16, 17, 18 aufweist. Ein durchströmbarer Querschnitt des Arbeitsturbinenaustritts 15 hat die Gestalt einer Kreisringscheibe, welche den Strömungskanalinnenradius RIP bzw. Nabenradius RTD als Kreisringscheibeninnenradius und den Strömungskanalaußenradius RAP als Kreisringscheibenaußenradius aufweist.

Der Luftleitgehäuseaußenradius RAB und der Strömungskanalaußenradius RAP entsprechen einander im Wesentlichen, wobei der Luftleitgehäuseaußenradius RAB (etwas) größer als der Strömungskanalaußenradius RAP sein kann, oder umgekehrt. Anders ausgedrückt: Eine Länge bzw. ein Längenmaß des Luftleitgehäuseaußenradius RAB und Länge bzw. ein Längenmaß des Strömungskanalaußenradius RAP an der Position des Arbeitsturbinenaustritts 15 weichen nur unwesentlich voneinander ab. Es gilt: RAB ≈ RAP. Insbesondere weicht der Strömungskanalaußenradius RAP an der Position des Arbeitsturbinenaustritts 15 vom Luftleitgehäuseaußenradius RAB um höchstens ± 20 % ab (0,8 · RAB ≤ RAP ≤ 1,2 · RAB), insbesondere um höchstens ± 10 % (0,9 - RAB ≤ RAP ≤ 1,1 · RAB), weiter insbesondere um höchstens ± 5 % (0,95 · RAB ≤ RAP ≤ 1,05 · RAB). Hierbei ist insbesondere vorgesehen, dass der Strömungskanalaußenradius RAP auf Basis des Luftleitgehäuseaußenradius RAB erstellt wird, also RAP = f(RAB). Insbesondere sind - Fertigungstoleranzen außer Acht gelassen - der Luftleitgehäuseaußenradius RAB und der Strömungskanalaußenradius RAP gleich, also RAP = RAB.

Zudem entsprechen der Brennraumgehäuseinnenradius RIB und der Strömungskanalinnenradius RIP an der Position des Arbeitsturbinenaustritts 15 einander im Wesentlichen, wobei der Brennraumgehäuseinnenradius RIB größer als der Strömungskanalaußenradius RIP an der Position des Arbeitsturbinenaustritts 15 sein kann, oder umgekehrt. Anders ausgedrückt: Eine Länge bzw. ein Längenmaß des Brennraumgehäuseinnenradius RIB und Länge bzw. ein Längenmaß des Strömungskanalinnenradius RIP an der Position des Arbeitsturbinenaustritts 15 weichen nur unwesentlich voneinander ab. Es gilt: RIB ≈ RIP. Insbesondere weicht der Strömungskanalinnenradius RIP an der Position des Arbeitsturbinenaustritts 15 vom Brennraumgehäuseinnenradius RIB um höchstens ± 20 % ab (0,8 - RIB ≤ RIP ≤ 1,2 · RIB), insbesondere um höchstens ± 10 % (0,9 · RIB ≤ RIP ≤ 1,1 · RIB), weiter insbesondere um höchstens ± 5 % (0,95 · RIB ≤ RIP ≤ 1,05 · RIB). Hierbei ist insbesondere vorgesehen, dass der Strömungskanalinnenradius RIP am Arbeitsturbinenaustritt 15 auf Basis des Brennraumgehäuseinnenradius RIB erstellt wird, also RIP = f(RIB). Insbesondere sind - Fertigungstoleranzen außer Acht gelassen - der Brennraumgehäuseinnenradius RIB und der Strömungskanalinnenradius RIP an der Position des Arbeitsturbinenaustritts 15 gleich lang, also RIP = RIB.

Durch das Wellenleistungstriebwerk 1 ist eine Möglichkeit aufgezeigt, wie die eingangs erläuterte Aufgabe, ein besonders effizientes und zugleich kompaktes Wellenleistungstriebwerk bereitzustellen, gelöst wird.

### BEZUGSZEICHENLISTE

- 1: Wellenleistungstriebwerk
- 2: Heißgaserzeuger
- 3: Arbeitsturbine
- 4: Umkehrbrennkammer
- 4a: Umkehrbereich
- 5: äußeres Luftleitgehäuse
- 5a: Außenwand
- 5b: Luftleitgehäuseeingang
- 6: inneres Brennraumgehäuse
- 6a: Innenwand
- 7: Verdichtereinheit
- 8: Radialverdichterrad
- 9: Arbeitsgasströmungsrichtung
- 10: Turbinenrad des Heißgaserzeugers
- 11: Turbinenrad des Heißgaserzeugers
- 12: Strömungskanal
- 13: Heißgaserzeugerwelle
- 14: Arbeitsturbinenwelle
- 15: Arbeitsturbinengehäuseauslass
- 15a: Kanalaußenwandungselement
- 16: Arbeitsturbinenrad
- 17: Arbeitsturbinenrad
- 18: Arbeitsturbinenrad
- AX: Längsmittenachse
- RAB: Luftleitgehäuseaußenradius
- RIB: Brennraumgehäuseinnenradius
- RAP: Strömungskanalaußenradius
- RIP: Strömungskanalinnenradius
- RTD: Nabenradius

## Patentansprüche

1. Wellenleistungstriebwerk (1), aufweisend:
▪ einen Heißgaserzeuger (2) mit einer Umkehrbrennkammer (4), die ein äußeres Luftleitgehäuse (5) und ein inneres Brennraumgehäuse (6) aufweist,
▪ eine Arbeitsturbine (3), die in Arbeitsgasströmungsrichtung nach dem Heißgaserzeuger (2) angeordnet ist und einen Strömungskanal (12) definiert,
**dadurch gekennzeichnet, dass** ein Brennraumgehäuseinnenradius (RIB) am inneren Brennraumgehäuse (6) der Umkehrbrennkammer (4) und ein Strömungskanalinnenradius (RIP) an der Position eines Arbeitsturbinenaustritts (15) der Arbeitsturbine (3) einander im Wesentlichen entsprechen.

2. Wellenleistungstriebwerk (1) nach Anspruch 1, **dadurch gekennzeichnet, dass** der Brennraumgehäuseinnenradius (RIB) und der Strömungskanalinnenradius (RIP) sich um höchstens 20 %, insbesondere um höchstens 10 %, und weiter insbesondere um höchstens 5 %, in ihrem Maß voneinander unterscheiden.

3. Wellenleistungstriebwerk (1) nach Anspruch 1, **dadurch gekennzeichnet, dass** der Brennraumgehäuseinnenradius (RIB) und der Strömungskanalinnenradius (RIP) gleich sind.

4. Wellenleistungstriebwerk (1) nach einem der vorhergehenden Ansprüche, **dadurch gekennzeichnet, dass** ein Luftleitgehäuseaußenradius (RAB) am äußeren Luftleitgehäuse (5) der Brennkammer (4) und ein Strömungskanalaußenradius (RAP) an der Position des Arbeitsturbinenaustritts (15) der Arbeitsturbine (3) einander im Wesentlichen entsprechen.

5. Wellenleistungstriebwerk (1) nach einem der vorhergehenden Ansprüche, **dadurch gekennzeichnet, dass** die Arbeitsturbine (3) eine Freilaufturbine und/oder eine Niederdruckturbine ist.

6. Wellenleistungstriebwerk (1) nach einem der vorhergehenden Ansprüche, **dadurch gekennzeichnet, dass** die Arbeitsturbine (3) zwei, drei oder mehr Arbeitsturbinenstufen aufweist und/oder eine Drehzahl der Arbeitsturbine (3) bei 100% relativer Drehzahl des Wellenleistungstriebwerks wenigstens 15.000 Umdrehungen pro Minute und/oder höchstens 26.000 Umdrehungen pro Minute, insbesondere höchstens 22.000 Umdrehungen pro Minute beträgt.

7. Wellenleistungstriebwerk (1) nach einem der vorhergehenden Ansprüche, **dadurch gekennzeichnet, dass** eine Verdichtereinheit (7) des Heißgaserzeugers (2) ein Radialverdichterrad (8) aufweist, welche insbesondere die Endstufe bildet.

8. Wellenleistungstriebwerk (1) nach einem der vorhergehenden Ansprüche, **dadurch gekennzeichnet, dass** der Heißgaserzeuger (2) in zweiwelliger Bauweise ausgeführt ist.

9. Wellenleistungstriebwerk (1) nach einem der vorhergehenden Ansprüche, **dadurch gekennzeichnet, dass** es als ein Turboprop ausgeführt ist.

10. Wellenleistungstriebwerk (1) nach einem der Ansprüche 1 bis 8, **dadurch gekennzeichnet, dass** es als ein Helikoptertriebwerk ausgeführt ist.
